# FASCICULE DE BREVET EUROPEEN

(11) **EP 3 395 640 B1**
(45) Date de publication et mention de la délivrance du brevet: **25.09.2019**
(21) Numéro de dépôt: 18153077.5
(22) Date de dépôt: 23.01.2018
(51) Int. Cl.: B61H 5/00, F16D 55/224

(54) **BOGIE DE VÉHICULE FERROVIAIRE COMPORTANT UN SYSTÈME DE FREINAGE COMPRENANT TROIS DISQUES DE FREIN AGENCÉS ENTRE LES BOÎTES D'ESSIEU**
DREHGESTELL EINES SCHIENENFAHRZEUGS, DAS EIN BREMSSYSTEM MIT DREI BREMSSCHEIBEN UMFASST, DIE ZWISCHEN DEN ACHSENGEHÄUSEN ANGEORDNET SIND
BOGIE FOR A RAILWAY VEHICLE COMPRISING BRAKING SYSTEM COMPRISING THREE BRAKE DISKS ARRANGED IN BETWEEN THE AXLE BEARINGS

(30) Priorité: 24.01.2017 FR 1750571
(43) Date de publication de la demande: 31.10.2018
(73) Titulaire: ALSTOM Transport Technologies, 93400 Saint-Ouen (FR)
(72) Inventeur: COTTIN, Fabrice, 71670 Saint Firmin (FR)
(74) Mandataire: Lavoix

(56) Documents cités:
- WO-A1-2015/071254
- DE-A1- 19 821 688
- US-A- 2 673 623

## Description

La présente invention concerne un bogie de véhicule ferroviaire, comprenant :
- un châssis s'étendant sensiblement selon une direction longitudinale ;
- au moins un essieu s'étendant selon une direction transversale et monté mobile en rotation par rapport au châssis autour d'un axe de rotation transversal, au moins une roue étant montée sur chacune des parties extrêmes transversales dudit essieu,
- un système de freinage comprenant au moins trois disques de frein montés autour de l'essieu, agencés dans l'espace défini entre les roues, et au moins trois fourches de freinage agissant chacune sur un desdits disques de freinage, chaque fourche de freinage comprenant une paire de bras s'étendant chacun entre une première extrémité et une deuxième extrémité, les deuxièmes extrémités portant chacune un patin de freinage formant une paire de patins de freinage avec le patin de freinage de l'autre bras de ladite paire de bras, chacune des paires de patins de freinage étant disposée autour d'une partie d'un desdits disques de frein, et deux paires de patins de freinage successives selon la direction transversale s'étendant de part et d'autre de l'axe de rotation transversal de l'essieu.

Le document DE 198 21 688 A1 décrit un bogie de véhicule ferroviaire, comprenant un essieu et un système de freinage, comprenant cinq disques de frein.

L'invention s'applique à tout type de véhicule ferroviaire, mais est plus particulièrement adaptée pour les trains à très grandes vitesses, par exemple prévus pour rouler jusqu'à des vitesses supérieures à 250 km/h.

Compte-tenu des vitesses d'exploitation de ces trains, il est nécessaire de prévoir un système de freinage à disques particulièrement adapté à ces types de trains, comprenant au moins trois disques de frein, de sorte à obtenir de bonnes performances de freinage. Ce type de système de freinage comporte en outre pour chaque disque de frein une fourche de freinage dont les bras passent autour du disque de frein de sorte à agir sur les faces du disque lors du freinage.

Dans le cas d'un bogie « à boîtes d'essieu intérieures », c'est-à-dire dans la configuration dans laquelle les boîtes d'essieu sont montées sur l'essieu entre les deux roues, l'espace restant disponible entre les boîtes d'essieu ne permet pas le montage d'un tel système de frein à disques comprenant au moins trois disques de frein, compte-tenu de l'encombrement des fourches de freinage. En effet, lors du montage du système de frein, il est nécessaire de prévoir un débattement suffisant entre les bras de deux fourches adjacentes de sorte à permettre leur écartement sans qu'ils ne se chevauchent ou interfèrent entre eux dans la direction transversale.

Il est alors connu d'adapter un disque de frein sur chaque roue et de monter un disque de frein sur l'essieu entre les deux roues. Cette solution laisse une place disponible sur l'essieu pour y intégrer les boîtes d'essieu entre les deux roues.

Cependant, afin de pouvoir y intégrer des actionneurs, tels que des fourches, agissant sur les disques de frein montés sur les roues, il est nécessaire de décaler les boîtes d'essieu vers l'intérieur de l'essieu. Or, un tel décalage des boîtes d'essieu pose des problèmes de conception de la suspension primaire, en particulier liés à la raideur en roulis.

Par ailleurs, cette solution implique aussi d'utiliser des fourches différentes et/ou un agencement de fourches différent pour les disques de frein montés sur les roues et pour le disque agencé sur l'essieu entre les deux roues.

Enfin, cette solution ne donne pas entièrement satisfaction car c'est une solution lourde et coûteuse à l'achat ainsi qu'en pièces de rechange

L'un des buts de l'invention est de pallier ces inconvénients en proposant un bogie comprenant au moins trois disques de frein et des fourches correspondantes, notamment identiques, montés sur l'essieu entre les roues et permettant une intégration des boîtes d'essieu à une extrémité transversale de l'essieu entre les deux roues et les disques de frein d'extrémité.

A cet effet, l'invention concerne un bogie du type précité, dans lequel les premières extrémités des bras s'étendent toutes d'un même côté de l'axe de rotation de l'essieu.

On comprend que les fourches s'étendent deux à deux dans des plans parallèles alternativement différents, et de part et d'autre de l'axe de rotation de l'essieu. Ces plans peuvent être des plans parallèles à la direction longitudinale ou des plans perpendiculaires à la direction longitudinale.

On comprend alors, du fait que deux fourches consécutives s'étendent selon des axes différents, qu'il est possible de rapprocher les disques de frein équipés des fourches de freinage vers le centre de l'essieu, en évitant un chevauchement ou une interférence des bras des fourches entre eux.

Grâce à ces dispositions, on augmente la compacité du dispositif de freinage, ce qui permet de laisser un espace suffisant aux extrémités libres de l'essieu pour intégrer une boîte d'essieu entre une roue et un disque de frein.

Par conséquent, on augmente la compacité du châssis selon l'invention.

Selon d'autres caractéristiques du bogie de l'invention :
- ledit bogie comprend deux essieux et les premières extrémités des bras sont disposées entre les deux essieux ;
- chaque paire de patins de freinage est agencée pour enserrer une surface centrale de disque de frein, s'étendant autour de l'axe de rotation transversal de l'essieu ;
- les premières extrémités d'une paire de bras sont reliées entre elles par un piston permettant de faire varier l'écartement entre les bras d'une paire de bras entre une position active de freinage dans laquelle la paire de patins de freinage enserre la surface centrale de disque de frein et une position inactive dans laquelle la paire de patins de freinage est à distance du disque de frein ;
- au moins une partie des bras sont en regard l'un de l'autre dans un plan perpendiculaire à l'axe de rotation transversal ;
- les fourches de freinage sont fixées à une traverse solidaire du châssis s'étendant sensiblement transversalement au châssis ;
- deux fourches de freinage adjacentes sont fixées à la traverse à des hauteurs différentes ;
- ledit bogie comprend au moins une boîte d'essieu montée sur une extrémité transversale de l'essieu, entre une roue et un disque de frein, l'essieu étant mobile en rotation dans la boîte d'essieu ; et
- ledit bogie comprend au moins deux boîtes d'essieu, chaque boîte d'essieu étant montée sur une extrémité transversale de l'essieu, entre une roue et un disque de frein.

L'invention concerne en outre un véhicule ferroviaire comprenant le bogie décrit ci-dessus.

D'autres aspects et avantages de l'invention apparaîtront à la lecture de la description qui suit, donnée à titre d'exemple et faite en référence aux dessins annexés, dans lesquels :
- la figure 1 est une vue en perspective d'une extrémité d'un bogie comprenant un système de freinage selon l'invention,
- la figure 2 est une vue de dessus d'un essieu et du système de freinage du bogie de la figure 1, et
- la figure 3 est une vue en perspective de la figure 2.

Dans la description, le terme « longitudinal » est défini par rapport à la direction de circulation d'un véhicule ferroviaire sur des rails. Le terme « transversal » est défini selon une direction perpendiculaire à la direction longitudinale et correspond à la direction selon laquelle les rails sont espacés. Le terme « élévation » est défini selon une direction perpendiculaire à la direction longitudinale et à la direction transversale. Lorsque le véhicule ferroviaire circule sur des rails horizontaux, les directions longitudinale et transversale sont sensiblement horizontales et la direction d'élévation est sensiblement verticale. Les termes « en-dessous », « au-dessus », « haut », et « bas » sont définis par rapport à la direction d'élévation.

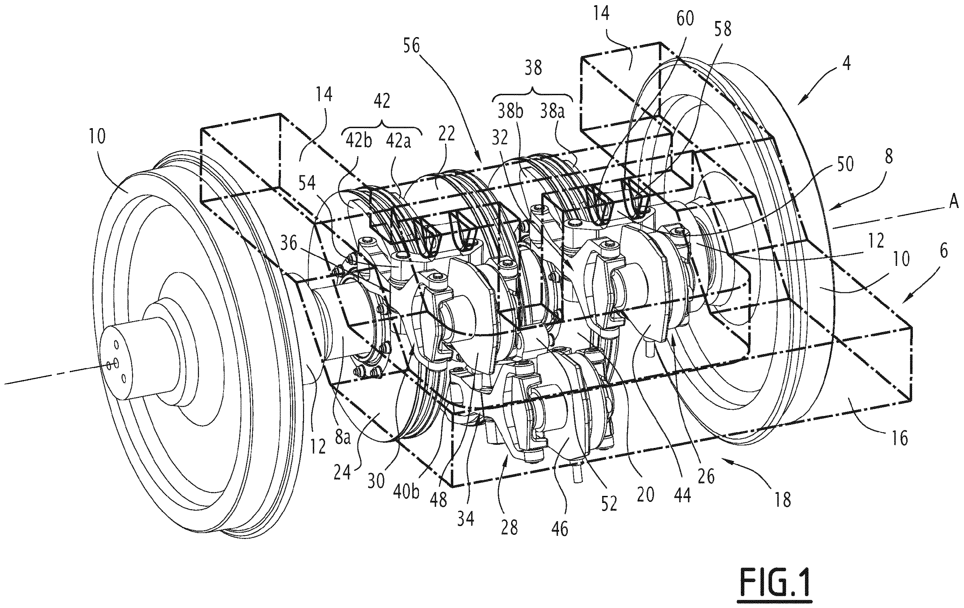

En référence à la figure 1, on décrit un bogie 4 de véhicule ferroviaire comprenant un châssis 6 s'étendant principalement sensiblement selon la direction longitudinale et portant à chacune de ses parties extrêmes longitudinales un essieu 8 s'étendant sensiblement selon une direction transversale. Chaque essieu 8 est monté mobile en rotation selon un axe de rotation transversal A.

Chacun des essieux 8 comporte un arbre 8a s'étendant transversalement et deux roues 10 fixées aux parties extrêmes transversales de l'arbre 8a et solidaires en rotation de celui-ci.

Par ailleurs, chaque essieu 8 est monté mobile en rotation dans deux boîtes d'essieu 12 ou paire de boîtes d'essieu s'étendant autour de l'essieu 8, entre les deux roues 10. Chaque boîte d'essieu 12 est formée d'un corps moulé comprenant un orifice d'axe transversal, par exemple pourvu de roulements à billes, à l'intérieur duquel l'essieu 8 est monté en rotation.

Selon le mode de réalisation de la figure 1, le châssis 6 comprend deux longerons 14 s'étendant sensiblement longitudinalement, dont seulement une partie est représentée sur la figure 1, reliant chacun l'une des boîtes d'essieu 12 d'une paire à l'une des boîtes d'essieu de l'autre paire de boîte d'essieu 12. Les longerons 14 sont par exemple reliés l'un à l'autre par deux traverses 16 s'étendant sensiblement transversalement. Une seule traverse 16 est représentée sur la figure 1.

Le bogie 4 comprend en outre un système de freinage 18 qui sera décrit par la suite, monté autour de chaque essieu 8.

Cette structure particulière de bogie n'est donnée qu'à titre d'exemple et d'autres structures pourraient être envisagées.

Ainsi, en variante, chaque roue 10 pourrait être montée mobile en rotation dans une boîte d'essieu 12 indépendamment des autres. Le bogie 4 pourrait comprendre plus de deux longerons, par exemple articulés entre eux. En outre, les longerons 14 pourraient être reliés entre eux par une traverse centrale.

Les roues 10 ont été représentées comme s'étendant à l'extérieur du bogie 4, mais elles pourraient être disposées à l'intérieur.

Le châssis 6 pourrait être formé par deux demi châssis articulés entre eux et portant chacun un des essieux 8 du bogie 4.

Le bogie 4 peut être motorisé ou non, c'est-à-dire qu'il peut comprendre, ou non, un ou plusieurs moteurs pour entraîner en rotation un ou les deux essieux 8 du bogie 4.

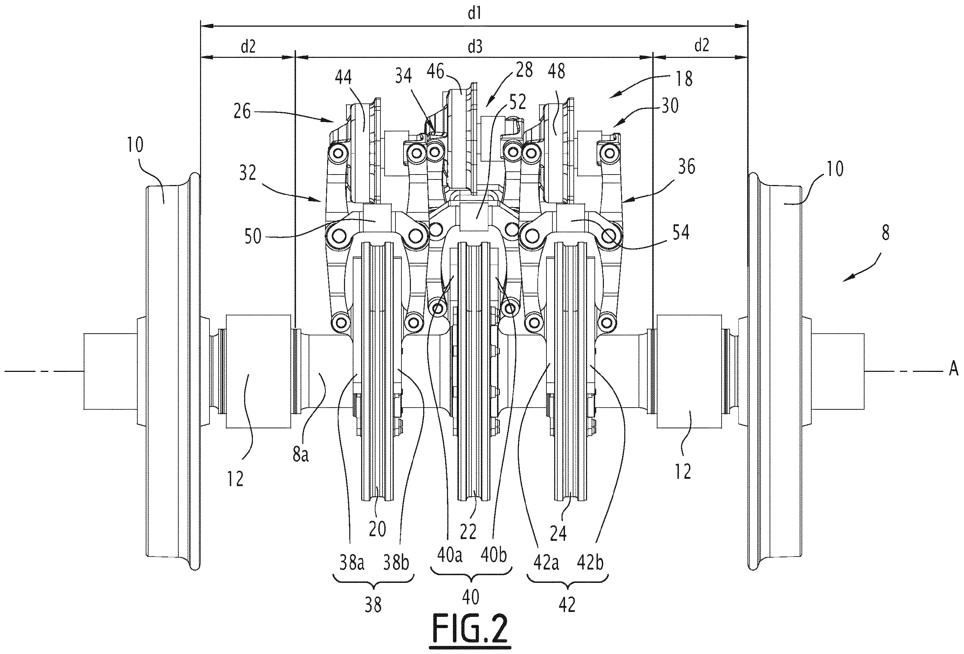

Comme visible sur la figure 2, l'espace entre les deux roues 10 présente un encombrement transversal d1 sensiblement égal à 1360 millimètres (mm). Par ailleurs, chaque boîte d'essieu 12 présente un encombrement transversal d2 sensiblement égal à 280 mm. Ainsi, l'espace disponible au centre de l'essieu 8, de sorte à intégrer le système de freinage 18, présente une longueur d3 sensiblement égale à 800 mm.

Le système de freinage 18 selon l'invention est adapté pour être intégré dans l'espace délimité entre les deux boîtes d'essieux 12, défini sur la figure 2 par l'encombrement transversal d3.

Dans la suite de la description seule la relation entre un essieu 8, deux boîtes d'essieu 12, et un système de freinage 18 sera décrite, cette relation étant identique pour tous les autres essieux et boîtes d'essieu 12 du bogie 4.

En relation aux figures 1 à 3, on décrit le système de freinage 18 monté autour de l'essieu 8.

Le système de freinage 18 comporte au moins trois disques de frein 20, 22, 24 montés autour de l'essieu 8, et plus particulièrement autour de l'arbre 8a de l'essieu 8, dans l'espace défini entre les deux roues 10.

Le système de freinage 18 comporte en outre trois fourches de freinage 26, 28, 30 agissant respectivement sur les disques de frein 20, 22, 24. En particulier, les disques de frein 20, 22, 24 sont agencés dans l'espace défini entre les deux boîtes d'essieu 12.

Ainsi, chaque boîte d'essieu 12 est montée sur une extrémité transversale de l'essieu 8 entre une roue 10 et un disque de frein 20, 24, l'essieu 8 étant mobile en rotation dans les boîtes d'essieu 12.

Chaque fourche de freinage 26, 28, 30 comprend une paire de bras 32, 34, 36 s'étendant chacun entre une première extrémité et une deuxième extrémité, les deuxièmes extrémités portant chacune un patin de freinage 38a, 38b, 40a, 40b, 42a, 42b formant des paires de patins de freinage 38, 40, 42. Ainsi chaque fourche de freinage 26, 28, 30 comprend deux bras et deux patins de freinage portés chacun par la deuxième extrémité des bras.

Les premières extrémités de chacune des paires de bras 32, 34, 36 sont reliées à un dispositif d'actionnement, dans cet exemple un piston 44, 46, 48, permettant de faire varier l'écartement entre les bras d'une paire de bras 32, 34, 36, entre une position active de freinage dans laquelle la paire de patin de freinage 38, 40, 42 est appliquée contre et enserre une partie du disque de frein 20, 22, 24, et une position inactive dans laquelle la paire de patin de freinage 38, 40, 42 est écartée du disque de frein 20, 22, 24.

Sur les figures, les paires de bras 32, 34, 36 sont dans la position active de freinage. Dans cette position, les fourches de freinage 26, 28, 30 freinent la rotation de l'essieu 8, et par conséquent freinent le bogie 4.

Les fourches de freinage 26, 28, 30 comprennent, de manière connue en soi, des supports de frein 50, 52, 54 adaptés pour supporter les bras d'une paire de bras 32, 34, 36.

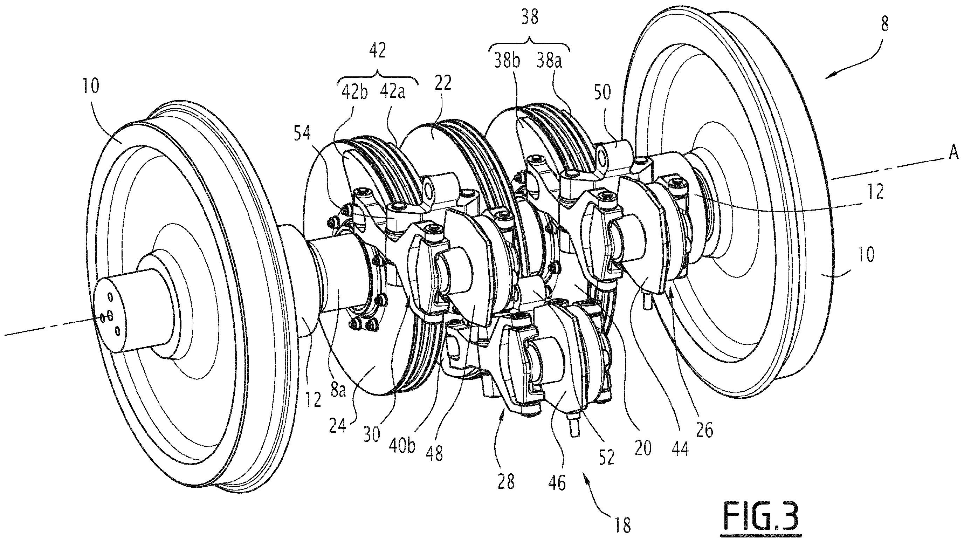

Les patins de freinage 38a, 38b, 40a, 40b, 42a, 42b sont agencés pour enserrer une surface centrale de disque de frein 20, 22, 24, s'étendant autour de l'axe de rotation A. On voit en particulier sur les figures 1 et 3, les paires de patins 38 et 42 qui enserrent respectivement les surfaces centrales des disques de frein 20 et 24, s'étendant autour de l'axe de rotation A. On distingue également sur ces figures, le patin de freinage 40b qui enserre une surface centrale du disque de frein 22. Les surfaces centrales d'un disque de frein 20, 22, 24 sont par exemple sensiblement en regard l'une de l'autre par rapport à un plan perpendiculaire à l'axe de rotation A, passant respectivement par le disque de frein 20, 22, 24.

De sorte à permettre le montage du système de freinage 18 dans l'espace délimité entre les deux boîtes d'essieu 12, défini sur la figure 2 par l'encombrement transversal d3, deux paires de patins successives 38 et 40, et 40 et 42 selon la direction transversale, s'étendent de part et d'autre de l'axe de rotation A selon la direction d'élévation.

Comme on le voit plus en détail sur les figures, les paires de patins successives 38, 40 et 42 sont alternativement disposées de part et d'autre de l'axe de rotation A selon la direction d'élévation.

Dans cet exemple particulier, les paires de patins de freinage 38, 40, 42 sont alternativement disposées en-dessous et au-dessus de l'axe de rotation A.

Selon ce mode de réalisation, le système de freinage 18 s'étend selon la direction longitudinale.

Plus précisément, la première paire de patin 38 est disposée au-dessus de l'axe de rotation A et enserre une surface centrale du disque de frein 20 située au-dessus de l'axe A. La deuxième paire de patin 40, qui suit la première paire de patin 38 selon la direction transversale, est disposée en dessous de l'axe de rotation A, et enserre une surface centrale du disque de frein 22 située au-dessous de l'axe de rotation A. La troisième paire de patin 42, qui suit la deuxième paire 40 selon la direction transversale, est disposée au-dessus de l'axe de rotation A et enserre une surface centrale du disque de frein 24 située au-dessus de l'axe de rotation A.

En outre, chacune des premières extrémités des bras s'étendent toutes d'un même côté de l'axe de rotation A. De même, les pistons 44, 46, 48 auxquels sont reliés les premières extrémités des bras, s'étendent tous d'un même côté de l'axe de rotation A. Par exemple, les premières extrémités des bras s'étendent entre les deux essieux 8 du bogie 4. Autrement dit, les premières extrémités des bras s'étendent à l'intérieur du châssis 6.

Ainsi, les bras associés aux patins de freinage 38b et 40a, et les bras associés aux patins de freinage 40b et 42a s'étendent en regard l'un de l'autre dans un plan perpendiculaire à l'axe de rotation A.

Comme montré sur la figure 1, le châssis 6 comporte une poutre de montage 56 ou traverse pour le montage des fourches de freinage 26, 28, 30 du système de freinage 18 dans le bogie 4.

Dans cet exemple, la poutre 56 a sensiblement la forme d'un « T ». La poutre 56 comporte une première portion de poutre s'étendant sensiblement transversalement entre les longerons 14, et une deuxième portion de poutre s'étendant sensiblement selon la direction d'élévation vers le bas, à partir du centre de la première portion de poutre. La poutre 56 est fixée par ses extrémités distales aux longerons 14 du châssis 6.

Les fourches de freinage 26, 28, 30 sont montées sur la poutre de montage 56. Plus particulièrement, les fourches de freinage 26, 28, 30 sont montées sur une face inférieure de la poutre de montage 56, par l'intermédiaire d'un dispositif de fixation. Le dispositif de fixation comprend, pour chaque fourche de freinage 26, 28, 30, deux pattes de montage, solidaires d'une portion supérieure d'un support de frein 50, 52, 54 et d'une face inférieure de la poutre 56. Les pattes de montage associées à la fourche 26 sont identifiées sur la figure 1 par les références 58 et 60. D'autres types de système de fixation pourraient bien entendu convenir.

En particulier, dans cet exemple, les fourches de freinage adjacentes 26 et 28, et 28 et 30 sont fixées à la poutre 56 à des hauteurs différentes. En effet, la fourche de freinage 28 est fixée en-dessous des fourches de freinage 26 et 30 dans la direction d'élévation.

Le système de freinage 18 selon l'invention décrit ci-dessus est plus compact que les systèmes de freinage connus.

Il est alors possible d'intégrer les deux boîtes d'essieu 12 et le système de freinage 18 dans l'espace entre les deux roues 10, et ainsi d'obtenir un bogie plus compact.

Dans une variante du mode de réalisation décrit ci-dessus, on inverse la disposition des paires de patin 38, 40, 42.

Dans cette variante les paires de patin de freinage 38, 42 d'extrémité sont disposées en-dessous de l'axe de rotation A et enserrent respectivement les surfaces centrales des disques de frein 20 et 24 situées en-dessous de l'axe de rotation A, et la paire de patin 40, intercalée entre les paires de patins d'extrémité 38, 42, est disposée au-dessus de l'axe de rotation A et enserre une surface centrale du disque de frein 22 située au-dessus de l'axe de rotation A.

Dans un autre mode de réalisation non représenté sur les figures, le système de freinage 18 s'étend selon la direction d'élévation, les paires de bras 32, 34, 36 s'étendant selon la direction d'élévation.

Dans ce mode de réalisation, les paires de patins de freinage 38, 40, 42 et les surfaces de freinage correspondantes des disques de frein 20, 22, 24 sont alternativement disposées d'un côté puis d'un autre côté de l'axe de rotation A, selon la direction longitudinale. Dans cet exemple, les paires de patins de freinage 38, 40, 42 sont alternativement disposées à l'extérieur et à l'intérieur du châssis 6.

Plus précisément, la première paire de patin 38 est disposée d'un côté de l'axe de rotation A et enserre une surface centrale du disque de frein 20 située à l'extérieur du châssis 6. La deuxième paire de patin 40 qui suit la première paire de patin 38 selon la direction transversale, est disposée d'un autre côté de l'axe de rotation, et enserre une surface centrale du disque de freinage 22 située à l'intérieur du châssis. La troisième paire de patin 42 qui suit la deuxième paire 40, selon la direction transversale, est disposée du même côté de l'axe de rotation A que la première paire de patins de freinage 38 et enserre une surface centrale du disque de freinage située à l'extérieur du châssis.

Par exemple, les paires de bras 32, 34, 36 sont alors toutes disposées au-dessus de l'axe de rotation A.

## Revendications

1. Bogie de véhicule ferroviaire, comprenant :
- un châssis (6) s'étendant selon une direction longitudinale ;
- au moins un essieu (8) s'étendant sensiblement selon une direction transversale et monté en rotation par rapport au châssis (6) autour d'un axe de rotation transversal (A), au moins une roue (10) étant montée sur chacune des parties extrêmes transversales dudit essieu (8),
- un système de freinage (18) comprenant au moins trois disques de frein (20, 22, 24) montés autour de l'essieu (8), agencés dans l'espace défini entre les roues (10), et au moins trois fourches de freinage (26, 28, 30) agissant chacune sur un desdits disques de frein (20, 22, 24), chaque fourche de freinage (26, 28, 30) comprenant une paire de bras (32, 34, 36) s'étendant chacun entre une première extrémité et une deuxième extrémité, les deuxièmes extrémités portant chacune un patin de freinage (38a, 38b, 40a, 40b, 42a, 42b) formant une paire de patins de freinage (38, 40, 42) avec le patin de freinage de l'autre bras de ladite paire de bras, chacune des paires de patins de freinage (38, 40, 42) étant disposée autour d'une partie d'un desdits disques de frein 20, 22, 24), et deux paires de patins de freinage successives selon la direction transversale s'étendant de part et d'autre de l'axe de rotation transversal (A) de l'essieu (8),
**caractérisé en ce que** les premières extrémités des bras (32, 34, 36) s'étendent toutes d'un même côté de l'axe de rotation transversal (A).

2. Bogie (4) selon la revendication 1, comprenant deux essieux (8) et dans lequel les premières extrémités des bras (32, 34, 36) sont disposées entre les deux essieux (8).

3. Bogie (4) selon la revendication 1 ou 2, dans lequel chaque paire de patins de freinage (38, 40, 42) est agencée pour enserrer une surface centrale de disque de frein (20, 22, 24), s'étendant autour de l'axe de rotation transversal (A) de l'essieu (8).

4. Bogie (4) selon la revendication 3, dans lequel les premières extrémités d'une paire de bras (32, 34, 36) sont reliées entre elles par un piston (44, 46, 48) permettant de faire varier l'écartement entre les bras d'une paire de bras (32, 34, 36), entre une position active de freinage dans laquelle la paire de patins de freinage (38, 40, 42) enserre la surface centrale de disque de frein (20, 22, 24) et une position inactive dans laquelle la paire de patins de freinage (38, 40, 42) est à distance du disque de frein (20, 22, 24).

5. Bogie (4) selon l'une quelconque des revendications 1 à 4, dans lequel au moins une partie des bras (30, 32) sont en regard l'un de l'autre dans un plan perpendiculaire à l'axe de rotation transversal (A).

6. Bogie (4) selon l'une quelconque des revendications 1 à 5, dans lequel les fourches de freinage (26, 28, 30) sont fixées à une traverse (56) solidaire du châssis (6) s'étendant sensiblement transversalement au châssis (6).

7. Bogie (4) selon la revendication 6, dans lequel deux fourches de freinage (26, 28, 30) adjacentes sont fixées à la traverse (56) à des hauteurs différentes.

8. Bogie (4) selon l'une quelconque des revendications 1 à 7, comprenant au moins une boîte d'essieu (12) montée sur une extrémité transversale de l'essieu (8), entre une roue (10) et un disque de frein (20, 24), l'essieu (8) étant mobile en rotation dans la boîte d'essieu (12).

9. Bogie (4) selon la revendication 8, comprenant au moins deux boîtes d'essieu (12), chaque boîte d'essieu (12) étant montée sur une extrémité transversale de l'essieu (8), entre une roue (10) et un disque de frein (20, 24).

10. Véhicule ferroviaire comprenant au moins un bogie (4) selon l'une quelconque des revendications précédentes.

## Patentansprüche

1. Drehgestell für ein Schienenfahrzeug, umfassend:
- ein Chassis (6), dass sich gemäß einer Längsrichtung erstreckt;
- mindestens eine Achse (8), die sich im Wesentlichen gemäß einer Querrichtung erstreckt und in Bezug auf das Chassis (6) um eine Querdrehachse (A) zur Drehung montiert ist, wobei mindestens ein Rad (10) an jedem der Querendbereiche der Achse (8) montiert sind,
- ein Bremssystem (18), das mindestens drei Bremsscheiben (20, 22, 24), die um die Achse (8) herum montiert sind und in dem zwischen den Rädern (10) definierten Raum angeordnet sind, und mindestens drei Bremsgabeln (20, 28, 30), die jeweils auf eine der Bremsscheiben (20, 22, 24) wirkt, umfasst, wobei jede Bremsgabel (26, 28, 30) ein Paar Arme (33, 34, 36) aufweist, von denen sich jeder zwischen einem ersten Ende und einem zweiten Ende erstreckt, wobei jedes der zweiten Enden einen Bremsschuh (38a, 38b, 40a, 40b, 42a, 42b) trägt, der mit dem Bremsschuh des anderen Arms des Armpaares ein Bremsschuhpaar (38, 40, 42) bildet, wobei jedes Bremsschuhpaar (38, 40, 42) um einen Bereich einer der Bremsscheiben (20, 22, 24) herum angeordnet ist und zwei gemäß der Querrichtung aufeinanderfolgende Bremsschuhpaare sich beidseitig der Querdrehachse (A) der Achse (8) erstrecken,
**dadurch gekennzeichnet, dass** die ersten Enden der Arme (32, 34, 36) sich alle von einer selben Seite der Querdrehachse (A) erstrecken.

2. Drehgestell (4) nach Anspruch 1, das zwei Achsen (8) umfasst und bei dem die ersten Enden der Arme (32, 34, 36) zwischen den zwei Achsen (8) angeordnet sind.

3. Drehgestell (4) nach Anspruch 1 oder 2, bei dem jedes Bremsschuhpaare (38, 40, 42) ausgebildet ist, auf eine Mittelfläche der Bremsscheiben (20, 22, 24) zu pressen, die sich um die Querdrehachse (A) der Achse (8) erstreckt.

4. Drehgestell (4) nach Anspruch 3, bei dem die ersten Enden eines Armpaares (32, 34, 36) untereinander durch einen Kolben (44, 46, 48) verbunden sind, der ermöglicht, den Abstand zwischen den Armen eines Armpaares (32, 34, 36) zwischen einer aktiven Bremsposition, in der das Bremsschuhpaar (38, 40, 42) auf die Mittelfläche der Bremsscheibe (20, 22, 24) presst, und einer inaktiven Position, in der das Bremsschuhpaar (38, 40, 42) einen Abstand zur Bremsscheibe (20, 22, 24) hat, zu variieren.

5. Drehgestell (4) nach einem beliebigen der Ansprüche 1 bis 4, bei dem mindestens ein Bereich der Arme (30, 32) in einer Ebene senkrecht zur Querdrehachse (A) einander gegenüberliegen.

6. Drehgestell (4) nach einem beliebigen der Ansprüche 1 bis 5, bei dem die Bremsgabeln (26, 28, 30) an einer mit dem Chassis (6) verbundenen Traverse (56) befestigt sind, die sich im Wesentlichen quer zum Chassis (6) erstreckt.

7. Drehgestell (4) nach Anspruch 6, bei dem zwei benachbarte Bremsgabeln (26, 28, 30) an der Traverse (56) in unterschiedlichen Höhen befestigt sind.

8. Drehgestell (4) nach einem beliebigen der Ansprüche 1 bis 7, mindestens einen Achskasten (12) umfassend, der an einem Querendbereich der Achse (8) zwischen einem Rad (10) und einer Bremsscheibe (20, 24) montiert ist, wobei die Achse (8) in dem Achskasten (12) drehbeweglich ist.

9. Drehgestell (4) nach Anspruch 8, mindestens zwei Achskästen (12) umfassend, wobei jeder Achskasten (12) an einem Querendbereich der Achse (8) zwischen einem Rad (10) und einer Bremsscheibe (20, 24) montiert ist.

10. Schienenfahrzeug, mindestens ein Drehgestell (4) nach einem beliebigen der vorhergehenden Ansprüche umfassend.

## Claims

1. A bogie for a railway vehicle, comprising:
- a chassis (6) extending in a longitudinal direction;
- at least one axle (8) extending substantially in a transverse direction and mounted rotatably relative to the chassis (6) around a transverse rotation axis (A), at least one wheel (10) being mounted on each of the transverse end parts of said axle (8),
- a braking system (18) comprising at least three brake discs (20, 22, 24) mounted around the axle (8), arranged in the space defined between the wheels (10), and at least three brake forks (26, 28, 30) each acting on one of said brake discs (20, 22, 24), each brake fork (26, 28, 30) comprising a pair of arms (32, 34, 36) each extending between a first end and a second end, the second ends each bearing a brake pad (38a, 38b, 40a, 40b, 42a, 42b) forming a pair of brake pads (38, 40, 42) with the brake pad of the other arm of said pair of arms, each of the pairs of brake pads (38, 40, 42) being positioned around part of one of said brake discs (20, 22, 24), and two successive pairs of brake pads in the transverse direction extending on either side of the transverse rotation axis (A) of the axle (8),
**characterized in that** the first ends of the arms (32, 34, 36) all extend on a same side of the transverse rotation axis (A).

2. The bogie (4) according to claim 1, comprising two axles (8) and wherein the first ends of the arms (32, 34, 36) are positioned between the two axles (8).

3. The bogie (4) according to claim 1 or 2, wherein each pair of brake pads (38, 40, 42) is arranged to grip a central brake disc surface (20, 22, 24) of a brake disk, extending around the transverse rotation axis (A) of the axle (8).

4. The bogie (4) according to claim 3, wherein the first ends of a pair of arms (32, 34, 36) are connected to one another by a piston (44, 46, 48) making it possible to vary the separation between the arms of a pair of arms (32, 34, 36) between an active braking position in which the pair of brake pads (38, 40, 42) grips the central brake disc surface (20, 22, 24) of the brake disk and an inactive position in which the pair of brake pads (38, 40, 42) is separated from the brake disc (20, 22, 24).

5. The bogie (4) according to any one of claims 1 to 4, wherein at least some of the arms (30, 32) are facing each other in a plane perpendicular to the transverse rotation axis (A).

6. The bogie (4) according to any one of claims 1 to 5, wherein the brake forks (26, 28, 30) are fastened to a crosspiece (56) secured to the chassis (6) extending substantially transversely to the chassis (6).

7. The bogie (4) according to claim 6, wherein two adjacent brake forks (26, 28, 30) are fastened to the crosspiece (56) at different heights.

8. The bogie (4) according to any one of claims 1 to 7, comprising at least one axle box (12) mounted on a transverse end of the axle (8), between a wheel (10) and a brake disc (20, 24), the axle (8) being rotatable in the axle box (12).

9. The bogie (4) according to claim 8, comprising at least two axle boxes (12), each axle box (12) being mounted on a transverse end of the axle (8), between a wheel (10) and a brake disc (20, 24).

10. A railway vehicle comprising at least one bogie (4) according to any one of the preceding claims.
